# EUROPÄISCHE PATENTSCHRIFT

(11) **EP 1 522 753 B1**
(45) Veröffentlichungstag und Bekanntmachung des Hinweises auf die Patenterteilung: **08.02.2006**
(21) Anmeldenummer: 03023013.0
(22) Anmeldetag: 11.10.2003
(51) Int. Cl.: F16D 25/10, F16D 21/06, F16D 25/0638

(54) **Hydraulische Doppelkupplung**
Hydraulic double clutch
Embrayage double hydraulique

(43) Veröffentlichungstag der Anmeldung: 13.04.2005
(73) Patentinhaber: BorgWarner Inc., Auburn Hills MI 48326 (US)
(72) Erfinder: Braford, Thomas E. Jr., Brighton MI 48114 (US); Bauer, Karl-Heinz, 76676 Graben-Neudorf (DE)
(74) Vertreter: Patentanwälte Westphal, Mussgnug & Partner

(56) Entgegenhaltungen:
- EP-A- 1 195 537
- DE-A- 4 239 233
- DE-U- 9 114 528

## Beschreibung

Die Erfindung bezieht sich auf eine hydraulische Doppelkupplung für ein Getriebe mit zwei koaxial angeordneten Getriebeeingangswellen. Diese umfasst ein angetriebenes Kupplungsgehäuse und zwei hydraulisch betätigte Kupplungen mit Reiblamellen und ringförmigen Betätigungskolben. Die erste Kupplung verbindet das Kupplungsgehäuse mit der ersten Getriebeeingangswelle schaltbar, die zweite Kupplung verbindet das Kupplungsgehäuse mit der zweiten Getriebeeingangswelle ebenfalls schaltbar. Beide Kupplungen weisen einen gemeinsamen Innenlamellenträger auf.

Aus der EP 1 195 537 B1 ist eine Doppelkupplung des gattungsbildenden Oberbegriffs des Patentanspruchs 1 bekannt. Hier ist das Kupplungsgehäuse über eine Steckverzahnung mit einer Kupplungsnabe verbunden. Die Kupplungsnabe trägt einen ringförmigen Kupplungssteg, welcher den Innenlamellenträger drehfest mit der Kupplungsnabe verbindet. Dieser Kupplungssteg trennt die beiden Kupplungen in axialer Richtung räumlich. Dadurch wird eine kompakte Bauweise mit hoher Drehmomentkapazität geschaffen.

Obwohl sich eine derartige Bauweise dem Grunde nach bewährt hat, besteht weiterhin das Bedürfnis, die Herstellungskosten und das Gewicht einer derartigen Doppelkupplung zu reduzieren.

Die Aufgabe der Erfindung ist es deshalb, eine Doppelkupplung in kompakter Bauweise mit hoher Drehmomentkapazität zu schaffen, welche vergleichsweise kostengünstig herstellbar ist und ein geringes Gewicht aufweist.

Diese Aufgabe wird bei einer hydraulischen Doppelkupplung der gattungsgemäßen Art mit Hilfe der Merkmale des kennzeichnenden Teils des Patentanspruchs 1 gelöst. Vorteilhafte Ausführungen und Weiterbildungen der Erfindung sind in den Unteransprüchen angegeben.

Bei einer hydraulischen Doppelkupplung der gattungsgemäßen Art ist erfindungsgemäß vorgesehen, dass der Innenlamellenträger einen der Betätigungskolben einendseitig durchdringt und dass diese Endseite des Innenlamellenträgers drehfest mit dem Kupplungsgehäuse verbunden ist. Ein über das Kupplungsgehäuse eingeleitetes Drehmoment wird damit unmittelbar auf den Innenlamellenträger übertragen, ohne dass die Kupplungsnabe selbst drehmomentübertragend wirkt. Ein drehmomentübertragender Kupplungssteg ist nicht erforderlich. Die Reduzierung drehmomentübertragender Teile führt einerseits zu einer Reduktion des Eigengewichts und darüber hinaus gegenüber anderen und üblichen Konstruktionsvarianten zu einer Verminderung der Material- und Herstellungskosten. Gleichzeitig wird durch diese Anordnung eine kompakte Bauweise bei hoher Drehmomentkapazität erreicht. Die äußeren Abmessungen der Doppelkupplung werden im Wesentlichen von den Reiblamellen bestimmt. Hinzu kommt der Platzbedarf für die ringförmigen Betätigungskolben.

Eine besonders kompakte Bauweise lässt sich erreichen, wenn man die Reiblamellen der beiden Kupplungen axial hintereinander anordnet. Vorzugsweise weisen hierbei die beiden Kupplungen eine gemeinsame Druckplatte auf.

In besonders vorteilhafter Ausgestaltung dieser Variante ist vorgesehen, die Druckplatte drehfest mit dem Innenlamellenträger zu verbinden. Die Druckplatte kann (einseitig oder beidseitig) axial beanschlagt sein oder auch in axialer Richtung fixiert sein. Eine Beanschlagung oder Fixierung kann mit Hilfe eines Sicherungsrings oder dergleichen erfolgen. Neben einer kompakten Bauweise erreicht man durch diese Maßnahmen eine funktionale Trennung der beiden Kupplungen.

Anstelle einer axialen Fixierung kann die Druckplatte auch starr mit dem Innenlamellenträger verbunden sein. Fertigungstechnische und damit Kostengründe werden ausschlaggebend sein, ob sich der Fachmann lediglich für eine axiale Beanschlagung, eine axiale Fixierung oder für eine starre Verbindung beispielsweise eine einstückige Ausführung entscheidet.

In einer besonders vorteilhaften Ausgestaltung der erfindungsgemäßen hydraulischen Doppelkupplung durchdringt der Innenlamellenträger den anderen der Betätigungskolben andernendseitig. Auf diese Weise kann der Innenlamellenträger insbesondere auch axial spiegelsymmetrisch ausgeführt werden.

In besonderer Ausgestaltung dieser Ausführungsvariante ist erfindungsgemäß vorgesehen, dass der andere Betätigungskolben den Innenlamellenträger andernendseitig radial abstützt und/oder zentriert und/oder verdrehsichernd und/oder drehfest hält. In radialer Richtung auf den Innenlamellenträger wirkende Kräfte und/oder in Umfangsrichtung wirkende Kräfte werden auf diese Weise nicht allein am Übergang Kupplungsgehäuse Innenlamellenträger, sondern auch über den anderen Betätigungskolben aufgenommen.

Eine bevorzugte Ausführungsvariante sieht vor, dass das Kupplungsgehäuse mit einer Kupplungsnabe drehfest verbunden ist und dass ein Zylinder vorgesehen ist, welcher an der Kupplungsnabe axial beanschlagt ist und an welchem der andere Betätigungskolben axial verschieblich geführt ist. Stützt sich entsprechend der vorbeschriebenen Ausführungsvariante der Innenlamellenträger andernendseitig an dem anderen Betätigungskolben ab, so werden etwaig auftretende Kräfte oder Momente über den Zylinder von der Kupplungsnabe aufgenommen.

Alternativ oder zusätzlich ist erfindungsgemäß vorgesehen, dass der Zylinder den Innenlamellenträger andernendseitig radial abstützt und/oder zentriert und/oder verdrehsichernd und/oder drehfest hält. Alternativ oder zusätzlich werden also die vorstehend beschriebenen Kräfte und/oder Momente unmittelbar über diesen Zylinder von der Kupplungsnabe aufgenommen.

In weiterer Ausgestaltung der Erfindung ist vorgesehen, dass das Kupplungsgehäuse oder die Kupplungsnabe einen weiteren Zylinder aufweisen, an welchem der eine Betätigungskolben axial verschieblich geführt ist. Vorzugsweise ist dieser weitere Zylinder im wesentlichen spiegelsymmetrisch in Achsrichtung zu dem vorstehend beschriebenen Zylinder ausgeführt.

Weiter ist erfindungsgemäß vorgesehen, dass die beiden Betätigungskolben gegen die Kraft einer oder mehrerer Rückholfeder(n) betätigbar sind.

Es können Rückholfedern eines jeden Typs verwendet werden. Insbesondere können die Rückholfedern Tellerfedern, Schraubenfedern oder Wellfedern sein.

Die Rückholfedern können gegen einen Kompensationskolben abgestützt sein. Ein derartiger Kompensationskolben dient dazu, einen Hydraulikflüssigkeitsausgleichsraum zu begrenzen, in dem ein mit zunehmender Drehzahl zunehmender Hydraulikflüssigkeitsdruck aufgebaut wird, welcher dem Hydraulikflüssigkeitsdruck in einem zur Betätigung der Kupplungen notwendigen Druckraum entgegenwirkt und ein unbeabsichtigtes Betätigen der jeweiligen Kupplung verhindert.

Alternativ oder zusätzlich können die Rückholfedern der beiden Betätigungskolben auch gegen ein gemeinsames Stützelement abgestützt sein. Die Reaktionskräfte der Rückholfedern der beiden Betätigungskolben wirken dann gegeneinander. Kräfte auf sonstige Bauteile der Doppelkupplung sind damit gering.

Zur Reduzierung des Bauraumes ist das gemeinsame Stützelement vorzugsweise ein Ringelement, welches axial an der Kupplungsnabe beanschlagt und/oder drehfest mit der Kupplungsnabe verbunden ist und/oder axial an der Kupplungsnabe fixiert ist und/oder starr mit der Kupplungsnabe verbunden ist. Für welche Variante sich hierbei der Fachmann wiederum entscheidet, hängt insbesondere von Konstruktions-, Material- und Fertigungskosten ab.

Es ist nicht zwingend erforderlich, dass zur Abstützung der Rückholfedern der beiden Betätigungskolben besondere Stützvorrichtungen vorgesehen werden müssen. Vielmehr hat sich herausgestellt, dass sich die beiden Betätigungskolben auch gemeinsam gegen dieselben Rückholfedern abstützen können. Auch hier sind die jeweiligen Reaktionskräfte nach innen gerichtet. Jeder Betätigungskolben stützt sich somit gegenüber dem anderen Betätigungskolben ab. Diese Ausführungsvariante kommt mit einer geringen Anzahl an Bauelementen aus.

In weiterer Ausgestaltung der Erfindung ist vorgesehen, dass den beiden Betätigungskolben jeweils ein Kompensationskolben zugeordnet ist, welche sich jeweils gegen den Innenlamellenträger abstützen. Als Abstützeinrichtung ist es ausreichend, wenn der Innenlamellenträger innenumfangsseitig umlaufende (oder unterbrochene) Umfangsstege aufweist. Eine Beanschlagung kann auch mit Hilfe von Sicherungsringen realisiert sein.

In weiterer Ausgestaltung der Erfindung kann den jeweiligen Betätigungskolben jeweils ein Kompensationskolben zugeordnet sein, welche sich gegen ein gemeinsames Stützelement abstützen. Als Stützelement kann entsprechend der vorstehenden Beschreibung ein Ringelement vorgesehen sein, welches axial an der Kupplungsnabe beanschlagt ist und/oder drehfest mit der Kupplungsnabe verbunden ist und/oder axial an der Kupplungsnabe fixiert ist und/oder starr mit der Kupplungsnabe verbunden ist.

Die Erfindung sieht weiterhin vor, dass die Reiblamellen Reibflächen aufweisen, deren mittlere Reibradien im Wesentlichen identisch sind. Diese Ausführungsvariante hat den Vorteil, dass beide Kupplungen der Doppelkupplung im Wesentlichen identische Kräfte und/oder Momente übertragen können. Beide Kupplungen weisen somit ein sehr ähnliches Schaltverhalten auf.

Ein weitgehend identisches Schaltverhalten wird dann erreicht, wenn die Reibflächen der Reiblamellen identisch sind.

Sowohl aus konstruktiver, fertigungstechnischer als auch aus funktionaler Sicht ist es vorteilhaft, die beiden Kupplungen der Doppelkupplung soweit als möglich identisch auszuführen. Erfindungsgemäß ist daher vorgesehen, die beiden Kupplungen in axialer Richtung im Wesentlichen spiegelsymmetrisch zueinander auszubilden.

Drei Ausführungsbeispiele der Erfindung sind in der Zeichnung dargestellt und werden im Folgenden näher beschrieben. Es zeigen:
- Figur 1: einen Antriebsstrang mit einem ersten Ausführungsbeispiel einer erfindungsgemäßen Doppelkupplung im Axialhalbschnitt,
- Figur 2: einen Antriebsstrang mit einem zweiten Ausführungsbeispiel einer erfindungsgemäßen Doppelkupplung im Axialhalbschnitt,
- Figur 3: einen Antriebsstrang mit einem dritten Ausführungsbeispiel einer erfindungsgemäßen Doppelkupplung im Axialhalbschnitt.

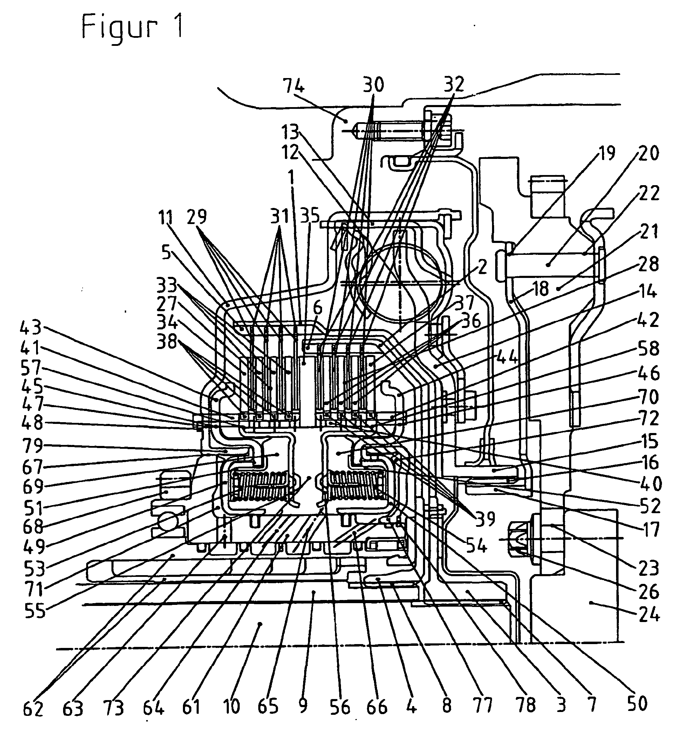

Die Figur 1 verdeutlicht anhand eines Ausschnittes aus einem beispielhaft gewählten Antriebsstrang für ein Kraftfahrzeug einen möglichen Grundaufbau und die Funktionsweise einer erfindungsgemäß gestalteten Doppelkupplung.

Auf der rechten Seite der Zeichnungsfigur ist eine Kurbelwelle 24 angedeutet, welche beispielsweise mit einer Verbrennungskraftmaschine, einem Motor oder dergleichen gekoppelt ist. Diese Seite stellt die Antriebsseite des Antriebsstrangs dar.

Auf der linken Seite des Zeichnungsblattes sind zwei Getriebeeingangswellen, nämlich eine Zentral- oder Vollwelle 10 und eine Hohlwelle 9 zu sehen, welche aus der Kupplungsglocke 74 der Doppelkupplung herausgeführt sind und beispielsweise mit einem hier nicht dargestellten Getriebe oder dergleichen gekoppelt sind. Diese Seite stellt die Abtriebsseite des Antriebsstrangs dar.

So kann beispielsweise die erste Getriebeeingangswelle (Zentral- oder Vollwelle 10) zum Betrieb aller ungeraden Gänge (z. B. 1, 3, 5 ...) und die zweite Getriebeeingangswelle (Hohlwelle 9) zum Betrieb aller geraden Gänge (z. B. 2, 4, 6 ...) des Kraftfahrzeugs vorgesehen sein. Der Rückwärtsgang könnte sowohl der ersten Getriebeeingangswelle (Zentral- oder Vollwelle 10), als auch der zweiten Getriebeeingangswelle (Vollwelle 9) des Getriebes zugeordnet sein.

Der Antriebsstrang umfasst ferner eine Schwungmasse 21, eine biege-/taumelweiche Scheibe 18, einen Torsionsschwingungsdämpfer 12 sowie die vorstehend genannte erfindungsgemäß ausgestaltete Doppelkupplung.

Dieser Antriebsstrang wird von einem äußeren Gehäuse umschlossen. Dieses äußere Gehäuse wird durch die sogenannte vorerwähnte Kupplungsglocke 74 gebildet. Diese Kupplungsglocke 74 umschließt folglich die beiden als nasslaufende Lamellenkupplungen ausgeführten Kupplungen, den Drehschwingungsdämpfer 12, die biege- und/oder taumelweiche Scheibe 18 sowie die Schwungmasse 21.

Der Dreh- oder Torsionsschwingungsdämpfer 12 ist in an sich bekannter Art und Weise ausgebildet. Eingangsseitig weist er ein Primärelement 14 in Form einer Halbschale auf. Ausgangsseitig ist ein Sekundärelement bestehend aus einer ersten Halbschale 13 und einer zweiten Halbschale 11, welche zugleich das Kupplungsgehäuse bildet, vorgesehen. Primärelement 14 und Sekundärelement 13, 11 sind über eine Mehrzahl von an dem Außenumfang des Drehschwingungsdämpfers 12 angeordnete Federpakete in Drehrichtung ein Drehmoment übertragbar gekoppelt. Exemplarisch ist ein Federpaket in der Zeichnung dargestellt.

Die beiden Halbschalen 11 und 14 des Torsionsschwingungsdämpfers 12 umschließen die beiden einzelnen Kupplungen der Doppelkupplung.

Jede Kupplung umfasst jeweils einen Außenlamellenträger 1, 2 und einen gemeinsamen Innenlamellenträger 40. Der Außenlamellenträger der ersten Kupplung wird nachfolgend als erster Au-ßenlamellenträger 1, der Außenlamellenträger der zweiten Kupplung wird im Folgenden als zweiter Außenlamellenträger 2 bezeichnet.

Die beiden Außenlamellenträger 1, 2 sind halbschalenförmig ausgebildet, wobei der erste Außenlamellenträger 1 den zweiten Außenlamellenträger 2 in axialer Richtung überragend umgreift. Der Innenlamellenträger 40 weist eine im Wesentlichen zylinderförmige Gestalt auf und erstreckt sich über die axial verlaufenden Bereiche der Halbschalen 1, 2.

Die beiden Außenlamellenträger 1, 2 weisen Innenverzahnungen 5, 6 auf, welche zur axial verschieblichen aber im Wesentlichen drehfesten Führung von im vorliegenden Fall jeweils vier entsprechende Außenverzahnungen 31, 32 aufweisenden Reiblamellen 29, 30 dienen. Letztere werden üblicherweise auch als Außenlamellen 29, 30 bezeichnet.

In entsprechender Weise sind am Außenumfang der den jeweiligen Außenlamellenträgern 1, 2 zugeordneten Innenlamellenträgerabschnitten des gemeinsamen Innenlamellenträgers 40 Außenverzahnungen 41, 42 angeordnet, in denen Innenverzahnungen aufweisende Reiblamellen, die sogenannten Innenlamellen 36, axial verschieblich aber drehfest geführt sind. Die beiden Innenlamellenträgerabschnitte werden durch eine gemeinsame Endplatte 35 voneinander getrennt.

An den beiden äußeren Enden des gemeinsamen Innenlamellenträgers 40 sind jeweils Druckplatten 34, 37 in gleicher Weise wie die vorstehend genannten Innenlamellen 36 axial verschieblich aber im Wesentlichen drehfest geführt.

Die äußeren Reiblamellen/Außenlamellen 29, 30, die inneren Reiblamellen/Innenlamellen 33, 36 sowie die beiden Druckplatten 34, 37 und die gemeinsame Endplatte 35 greifen wechselseitig verzahnungsartig in an sich bekannter Weise jeweils ein einer Kupplung zugeordnetes Lamellenpaket 27, 28 bildend ineinander.

Die beiden Lamellenpakete 27, 28 mit den entsprechenden Reiblamellen 29, 30, 33, 34, 35, 36, 37 sind somit auf dem gemeinsamen Innenlamellenträger 40 in axialer Richtung hintereinanderliegend angeordnet. Im vorliegenden Ausführungsbeispiel sind die Reibflächen aller Reiblamellen 29, 30, 33, 34, 35, 36, 37 im Wesentlichen gleich groß, sodass die einzelnen Kupplungen eine gleichwertige Leistungsfähigkeit aufweisen. Selbstverständlich ist es auch möglich, dass die Reibflächen der Reiblamellen verschieden große Durchmesser aufweisen.

Bestandteile der Kupplungen sind ferner nachfolgend im Detail beschriebene Kolben-/Zylindereinheiten, welche zur Betätigung der Kupplungen dienen. Insbesondere ist jeder Kupplung ein hydraulisch betätigbarer Betätigungskolben 43, 44 zugeordnet. Jeder dieser Betätigungskolben 43, 44 kann gegen eine der Druckplatten 34, 37 kraftübertragend und Reibschluss zwischen den einzelnen Reiblamellen 29, 30, 33, 34, 35, 36, 37 erzeugend und damit die jeweilige Kupplung betätigend gedrückt werden.

Wie sich insbesondere der Figur 1 entnehmen lässt, werden die beiden Kupplungen nach innen gerichtet betätigt, wobei die Reaktionskräfte gegen die gemeinsame Endplatte 35 wirken.

Der gemeinsame Innenlamellenträger 40 durchsetzt die beiden zur Betätigung der Kupplungen notwendigen ringförmigen Betätigungskolben 43, 44. Zu diesem Zweck weist der Innenlamellenträger jeweils endseitig über dem Außenumfang im Wesentlichen axial verlaufende Stege auf, welche entsprechende Öffnungen 45, 46 der jeweiligen Betätigungskolben 43, 44 verzahnungsartig durchgreifen. Einendseitig durchgreifen diese Stege auch korrespondierend hierzu im Kupplungsgehäuse 11 vorgesehene Öffnungen 47. Die Öffnungen 47 im Kupplungsgehäuse 11 (sowie in der Regel auch die Öffnungen 45, 46 in den Betätigungskolben 43, 44) sind in ihren Umfangsabmessungen so aufeinander abgestimmt, dass eine Relativverdrehung nicht möglich ist. Der Innenlamellenträger 40 ist auf diese Weise drehfest mit dem Kupplungsgehäuse 11 verbunden.

Um eine axiale Verschiebung des Innenlamellenträgers 40 zu verhindern, ist ein Sicherungsring 48 vorgesehen, welcher den Innenlamellenträger 40 am Kupplungsgehäuse 11 fixiert hält.

Das Kupplungsgehäuse 11 ist an einer Nahtstelle 67 starr mit einer Kupplungsnabe 61 verbunden. Diese Kupplungsnabe 61 umgreift die beiden Getriebeeingangswellen 9, 10 koaxial. Die Kupplungsnabe 61 trägt einen halbschalenförmigen Zylinder 77. Dieser Zylinder 77 ist mittels eines Sicherungsrings 78 in seiner Axialverschiebung begrenzt.

Bestandteil des Kupplungsgehäuses 11 ist ein Zylinder 79 in zu dem Zylinder 77 korrespondierender Art. An den beiden Zylindern 77, 79 sind die jeweiligen Betätigungskolben 43, 44 axial verschieblich geführt. Zylinder 77 und Betätigungskolben 44 dienen als Abstützung und Zentrierung für den Innenlamellenträger 40.

Die Betätigungseinrichtungen für die beiden Kupplungen umfassen neben den vorerwähnten Betätigungskolben 43, 44, mittels derer die jeweiligen Druckplatten 34, 37 der Lamellenpakete 27, 28 in Richtung der gemeinsamen Endplatten 35 verschoben werden können, jeweils einen Druckkolben 49, 50, einen Kolben 51, 52, einen Ausgleichskolben 55, 56 sowie eine Mehrzahl in Umfangsrichtung angeordneter Schraubenfedern 53, 54. Die jeweiligen Betätigungskolben 43, 44 stützen sich nach außen gegen die jeweiligen Druckkolben 49, 50 ab, welche axial verschieblich an den Zylindern 79, 77 und am Außenumfang der Kupplungsnabe 61 geführt sind. Nach innen gerichtet stützen sich die Betätigungskolben 43, 44 gegen die Kolben 51, 52 ab. Diese wiederum stützen sich nach innen gerichtet gegen die Schraubenfedern 53, 54 ab. Die Schraubenfedern 53, 54 sind nach innen gerichtet gegen die Außenflächen der Kompensationskolben 55, 56 abgestützt. Diese Kompensationskolben 55, 56 stützen sich mit deren Innenflächen gegen radial nach innen gerichtete umlaufende Umfangsstege 57, 58 am Innenlamellenträger 40 ab.

Obwohl das gesamte Kupplungssystem unmittelbar auf der zweiten Getriebeeingangswelle (Hohlwelle 9) gelagert werden könnte, ist bei der vorliegenden Ausführungsform ein separates flanschartiges Bauteil, nachfolgend als Träger 62 bezeichnet, vorgesehen, welches die beiden Getriebeeingangswellen, die Hohlwelle 9 und die Vollwelle 10, koaxial umgreift und auf welchem die Kupplungsnabe 61 drehbar gelagert ist. Zur Lagerung der Kupplungsnabe 61 auf dem Träger 62 werden vorliegend Gleitlager verwendet. Als Alternative für reduzierte Reibmomente können Wälzlager (Nadellager) verwendet werden.

Der Träger 62 kann einteilig oder sowohl axial als auch radial mehrteilig ausgeführt sein. Im vorliegenden Fall ist der Träger 62 zweiteilig ausgeführt. Er besteht aus einem Mantel und einer von diesem umschlossenen Buchse. Die zylindermantelförmige Buchse weist in deren Außenumfang in axialer Richtung verlaufende, unterschiedlich lange Längsnuten auf. Der Mantel weist korrespondierend zur Anordnung der vorerwähnten Längsnuten vier in Umfangsrichtung verlaufende Nuten auf. Diese Umfangsnuten sind über radial verlaufende hier nicht dargestellte Öffnungen mit den entsprechenden Längsnuten verbunden.

Korrespondierend zu den Umfangsnuten weist die Kupplungsnabe 61 vier im Wesentlichen radial und zum Teil axial geneigt verlaufende Öffnungen auf, welche nachfolgend als Hydraulikflüssigkeitskanäle 63, 64, 65 und 66 bezeichnet sind. Über diese Hydraulikflüssigkeitskanäle 63, 64, 65, 66 erfolgt eine Versorgung der durch die Kolben 43, 44, 49, 50, 55, 56 gebildeten Volumina (erster Hydraulikflüssigkeitsbetätigungsraum 71, zweiter Hydraulikflüssigkeitsbetätigungsraum 72, erster Hydraulikflüssigkeitsausgleichsraum 69, zweiter Hydraulikflüssigkeitsausgleichsraum 70, Kühlflüssigkeitsraum 73) mit Hydraulikflüssigkeit.

Über den ersten Hydraulikflüssigkeitskanal 63 kann der erste Hydraulikflüssigkeitsbetätigungsraum 71 mit Hydraulikflüssigkeit druckbeaufschlagt werden. Dieser Hydraulikflüssigkeitsdruck drückt den Druckkolben 49 und damit den Betätigungskolben 45 und den Kolben 51 entgegen dem Druck der Schraubenfedern 53 nach innen. Eine derartige Verschiebung des Betätigungskolbens 45 hat zur Folge, dass dessen Außenumfang gegen die Druckplatte 34 der ersten Kupplung diese betätigend gedrückt wird.
In gleicher Weise kann über den vierten Hydraulikflüssigkeitskanal 66 der zweite Hydraulikflüssigkeitsbetätigungsraum 72 mit Hydraulikflüssigkeit druckbeaufschlagt werden. Auf Grund dieses Hydraulikflüssigkeitsdrucks wird der Druckkolben 50 und damit der Betätigungskolben 44 und der Kolben 52 entgegen dem Druck der Schraubenfedern 54 nach innen gedrückt. Dies hat in entsprechender Weise zur Folge, dass der Außenumfang des Betätigungskolbens 44 gegen die Druckplatte 37 der zweiten Kupplung diese betätigend gedrückt wird.

Über die beiden Hydraulikflüssigkeitskanäle 64 und 65 werden einerseits die Hydraulikflüssigkeitsausgleichsräume 69, 70 als auch der Kühlflüssigkeitsraum 73 mit Hydraulikflüssigkeit befüllt.

Die Hydraulikflüssigkeit in den Hydraulikflüssigkeitsausgleichsräumen 69, 70 dient dazu, einen fliehkraftbedingten Hydraulikflüssigkeitsgegendruck zu erzeugen, welcher der fliehkraftbedingten Druckzunahme im jeweiligen Hydraulikflüssigkeitsbetätigungsraum 71, 72 entgegen wirkt.

Die Hydraulikflüssigkeit im Kühlflüssigkeitsraum 73 wird zur Kühlung der Reiblamellen 29 30 33, 34, 35, 36, 37 durch radial verlaufende (hier nicht dargestellte) Öffnungen im Innenlamellenträger 40 zu den Reiblamellen 29, 30, 33, 34, 35, 36, 37 geführt.

Die vorstehend im Detail beschriebenen Komponenten des Antriebsstranges sind wie folgt miteinander verbunden. Die Kurbelwelle 24 ist mit dem Innenumfang der Schwungmasse 21 verschraubt (Schraube 26, Bohrung 23). Der Außenumfang der Schwungmasse 21 ist mit dem Außenumfang der biege-/taumelweichen Scheibe 18 vernietet (Außenrandbohrung 19, Niete 20, Bohrung 22). Der Innenumfang der biege-/taumelweichen Scheibe 18 trägt einen Innenflansch 17 mit einer Außenverzahnung. Diese Außenverzahnung greift in der Art einer Steckverzahnung 16 in eine Innenverzahnung des Primärelements 14 des Torsionsschwingungsdämpfers 12 eine drehfeste Verbindung herstellend ein.

Das Sekundärelement 13 des Torsionsschwingungsdämpfers 12, welches zugleich das Kupplungsgehäuse bildet, ist in vorstehend beschriebener Weise drehfest mit dem Innenlamellenträger 40 der Doppelkupplung verbunden.

Die beiden Kupplungen (Lamellenpakete 27, 28; Betätigungskolben 44, 45) verbinden den Innenlamellenträger 40 schaltbar mit den Außenlamellenträgern 1, 2, welche wiederum über deren Flansche 3, 4 mittels Steckverzahnung 7, 8 drehfest mit den beiden Getriebeeingangswellen 9, 10 verbunden sind.

Ein über die Kurbelwelle 24 eingeleitetes Drehmoment kann also mittels der Doppelkupplung auf eine der beiden Getriebeeingangswellen 9, 10 übertragen werden.

Der Vollständigkeit halber sei erwähnt, dass eine über die Kurbelwelle 24 eingeleitete Drehbewegung über ein an der Kupplungsnabe 61 angeordnetes Pumpenantriebszahnrad 68 auch eine hier nicht dargestellte Hydropumpe zur Bereitstellung des vorstehend erwähnten Hydraulikflüssigkeitsdrucks antreibt.

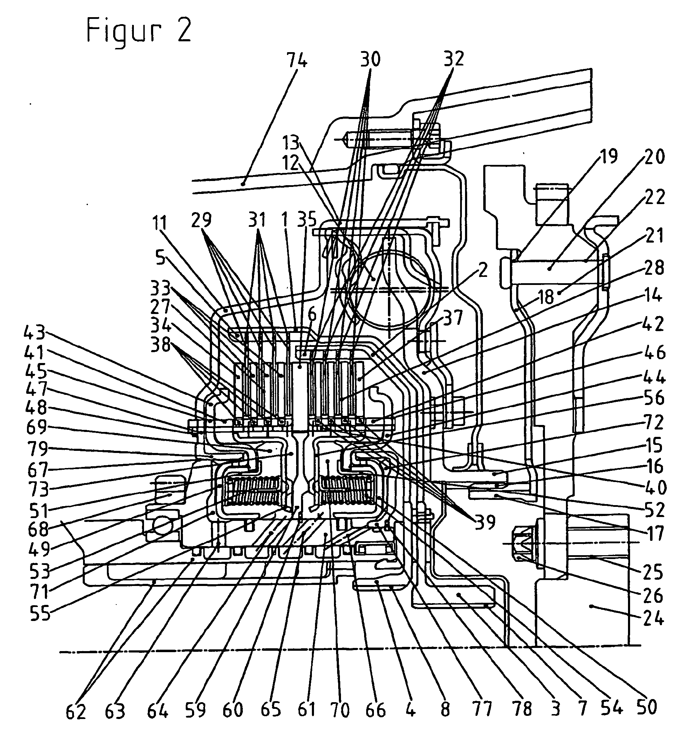

Die Figur 2 zeigt einen Ausschnitt aus einem Antriebsstrang der vorstehend beschriebenen Art mit einem zweiten Ausführungsbeispiel einer erfindungsgemäßen Doppelkupplung.

Das in der Figur 2 dargestellte Ausführungsbeispiel einer erfindungsgemäßen Doppelkupplung unterscheidet sich von dem vorstehend beschriebenen gemäß der Figur 1 dadurch, dass die Kompensationskolben 55, 56 nicht gegen an dem Innenlamellenträger angeordnete umlaufende Stege 57, 58 abgestützt sind, sondern gegen ein Ringelement 59, welches durch einen Sicherungsring 60 an der Kupplungsnabe 61 anschlagbegrenzt abgestützt ist.

Neben der die Kompensationskolben 55, 56 und die Betätigungseinrichtungen bestehend aus Betätigungskolben 43, 44, Druckkolben 43, 50, Kolben 51, 52 und Schraubenfedern 53, 54 in axialer Richtung abstützenden Funktion hat das Ringelement 59 die Aufgabe den Hydraulikflüssigkeitsfluss zu den Reiblamellen 29, 30, 33, 34, 35, 36, 37 zu leiten. Zu diesem Zweck weist das Ringelement 59 außenumfangsseitig eine Verdickung auf, welche einströmende Hydraulikflüssigkeit in axiale Richtung umlenkt.

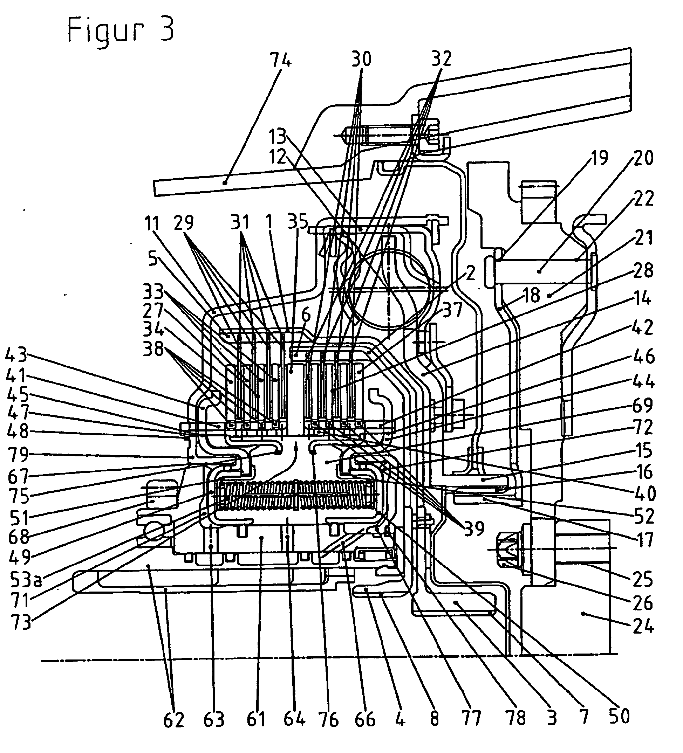

Die Figur 3 zeigt einen Ausschnitt aus einem weiteren Antriebsstrang der vorstehend angegebenen Art mit einem dritten Ausführungsbeispiel einer erfindungsgemäßen Doppelkupplung.

Das in der Figur 3 dargestellte Ausführungsbeispiel unterscheidet sich von den Doppelkupplungen gemäß den ersten beiden Ausführungsbeispielen darin, dass auf die Kompensationskolben 55, 56 vollständig verzichtet wurde.

Anstelle jeweils den einzelnen Betätigungskolben 43, 44 zugeordneten Schraubenfedern 53, 54 sind nunmehr eine Mehrzahl in Umfangsrichtung angeordneter Schraubenfedern 53a vorgesehen, gegen welche der Betätigungskolben 43 einendseitig über den Kolben 51 und der Betätigungskolben 44 andernendseitig über den Kolben 52 abgestützt ist.

Anstelle der beiden Kompensationskolben 55, 56 sind nunmehr zwei Kühlflüssigkeitsleitbleche 75, 76 vorgesehen, welche starr mit dem Innenlamellenträger verbunden sind und welche die Hydraulikflüssigkeit zu den Reiblamellen 29, 30, 33, 34, 35, 36, 37 zu deren Kühlung leiten.

### Bezugszeichenliste

- 1: erster Außenlamellenträger
- 2: zweiter Außenlamellenträger
- 3: erster Flansch
- 4: zweiter Flansch
- 5: Innenverzahnung
- 6: Innenverzahnung
- 7: Steckverzahnung
- 8: Steckverzahnung
- 9: Hohlwelle
- 10: Vollwelle
- 11: Kupplungsgehäuse
- 12: Torsionsschwingungsdämpfer
- 13: Sekundärelement
- 14: Primärelement
- 15: Primärflansch
- 16: Steckverzahnung
- 17: Innenflansch
- 18: biege-/taumelweiche Scheibe
- 19: Außenrandbohrung
- 20: Niete
- 21: Schwungmasse
- 22: Bohrung
- 23: Bohrung
- 24: Kurbelwelle
- 25: Gewindebohrung
- 26: Schraube
- 27: erstes Lamellenpaket
- 28: zweites Lamellenpaket
- 29: Außenlamelle
- 30: Außenlamelle
- 31: Außenverzahnung
- 32: Außenverzahnung
- 33: Innenlamelle
- 34: Druckplatte
- 35: Endplatte
- 36: Innenlamelle
- 37: Druckplatte.
- 38: Innenverzahnung
- 39: Innenverzahnung
- 40: Innenlamellenträger
- 41: Außenverzahnung
- 42: Außenverzahnung
- 43: erster Betätigungskolben
- 44: zweiter Betätigungskolben
- 45: Öffnung
- 46: Öffnung
- 47: Öffnung
- 48: Sicherungsring
- 49: Druckkolben
- 50: Druckkolben
- 51: Kolben
- 52: Kolben
- 53: Schraubenfeder
- 53a: Schraubenfeder
- 54: Schraubenfeder
- 55: Kompensationskolben
- 56: Kompensationskolben
- 57: Umfangssteg
- 58: Umfangssteg
- 59: Ringelement
- 60: Sicherungsring
- 61: Kupplungsnabe
- 62: Träger
- 63: Hydraulikflüssigkeitskanal
- 64: Hydraulikflüssigkeitskanal
- 65: Hydraulikflüssigkeitskanal
- 66: Hydraulikflüssigkeitskanal
- 67: Nahtstelle
- 68: Pumpenantriebszahnrad
- 69: erster Hydraulikflüssigkeitsausgleichsraum
- 70: zweiter Hydraulikflüssigkeitsausgleichsraum
- 71: erster Hydraulikflüssigkeitsbetätigungsraum
- 72: zweiter Hydraulikflüssigkeitsbetätigungsraum
- 73: Kühlflüssigkeitsraum
- 74: Kupplungsglocke
- 75: erstes Kühlflüssigkeitsleitblech
- 76: zweites Kühlflüssigkeitsleitblech
- 77: Zylinder
- 78: Zylinder
- 79: Zylinder

## Patentansprüche

1. Hydraulische Doppelkupplung für ein Getriebe mit zwei koaxial angeordneten Getriebeeingangswellen (9, 10)
- mit einem angetriebenen Kupplungsgehäuse (11) und
- mit zwei hydraulisch betätigten Kupplungen mit Reiblamellen (29, 30, 33, 34, 35, 36, 37) und ringförmigen Betätigungskolben (43, 44), wobei die erste Kupplung das Kupplungsgehäuse (11) mit der ersten Getriebeeingangswelle (10) und die zweite Kupplung das Kupplungsgehäuse (11) mit der zweiten Getriebeeingangswelle (9) schaltbar verbindet und die beiden Kupplungen einen gemeinsamen Innenlamellenträger (40) aufweisen,
**dadurch gekennzeichnet, dass**
- der Innenlamellenträger (40) einen Betätigungskolben (43) der Betätigungskolben (43, 44) einendseitig durchdringt und dass
- diese Endseite des Innenlamellenträgers (40) drehfest mit dem Kupplungsgehäuse (11) verbunden ist.

2. Hydraulische Doppelkupplung nach Anspruch 1,
**dadurch gekennzeichnet, dass** die beiden Kupplungen axial hintereinander angeordnet sind.

3. Hydraulische Doppelkupplung nach Anspruch 2,
**dadurch gekennzeichnet, dass** die beiden Kupplungen eine gemeinsame Druckplatte (35) aufweisen.

4. Hydraulische Doppelkupplung nach Anspruch 3,
**dadurch gekennzeichnet, dass** die Druckplatte (35) drehfest mit dem Innenlamellenträger (40) verbunden ist.

5. Hydraulische Doppelkupplung nach Anspruch 4,
**dadurch gekennzeichnet, dass** die Druckplatte (35) axial beanschlagt oder axial fixiert ist.

6. Hydraulische Doppelkupplung nach Anspruch 5,
**dadurch gekennzeichnet, dass** die Druckplatte (35) starr mit dem Innenlamellenträger (40) verbunden ist.

7. Hydraulische Doppelkupplung nach einem der vorangegangenen Ansprüche,
**dadurch gekennzeichnet, dass** der Innenlamellenträger (40) den anderen (44) der Betätigungskolben (43, 44) andernendseitig durchdringt.

8. Hydraulische Doppelkupplung nach Anspruch 7,
**dadurch gekennzeichnet, dass** der andere Betätigungskolben (44) den Innenlamellenträger (40) andernendseitig radial abstützt und/oder zentriert und/oder verdrehsichernd und/oder drehfest hält.

9. Hydraulische Doppelkupplung nach einem der vorangegangenen Ansprüche,
**dadurch gekennzeichnet, dass** das Kupplungsgehäuse (11) mit einer Kupplungsnabe (61) drehfest verbunden ist und dass ein Zylinder (77) vorgesehen ist, welcher an der Kupplungsnabe (61) axial beanschlagt ist und an welcher der andere Betätigungskolben (44, 50) axial verschieblich geführt ist.

10. Hydraulische Doppelkupplung nach Anspruch 9,
**dadurch gekennzeichnet, dass** der Zylinder (77) den Innenlamellenträger (40) andernendseitig radial abstützt und/oder zentriert und/oder verdrehsichernd und/oder drehfest hält.

11. Hydraulische Doppelkupplung nach einem der vorangegangenen Ansprüche,
**dadurch gekennzeichnet, dass** das Kupplungsgehäuse (11) oder die Kupplungsnabe einen weiteren Zylinder (79) aufweisen, an welchem der eine Betätigungskolben (45, 49) axial verschieblich geführt ist.

12. Hydraulische Doppelkupplung nach einem der vorangegangenen Ansprüche,
**dadurch gekennzeichnet, dass** die beiden Betätigungskolben (44, 45) gegen die Kraft einer oder mehrerer Rückholfeder(n) (53, 53a, 54) betätigbar sind.

13. Hydraulische Doppelkupplung nach Anspruch 12,
**dadurch gekennzeichnet, dass** die Rückholfeder(n) eine Tellerfeder(n), eine Schraubenfeder(n) (53, 53a, 54) oder eine Wellfeder(n) ist/sind.

14. Hydraulische Doppelkupplung nach Anspruch 12 oder 13,
**dadurch gekennzeichnet, dass** die Rückholfeder(n) (53, 54) gegen einen Kompensationskolben (55, 56) abgestützt ist/sind.

15. Hydraulische Doppelkupplung nach einem der Ansprüche 12 bis 14,
**dadurch gekennzeichnet, dass** die Rückholfedern (53, 54) der beiden Betätigungskolben (44, 45) gegen ein gemeinsames Stützelement (59) oder gegen ein getrenntes Element abgestützt sind.

16. Hydraulische Doppelkupplung nach Anspruch 15,
**dadurch gekennzeichnet, dass** das gemeinsame Stützelement ein Ringelement (59) ist, welches axial an der Kupplungsnabe (61) beanschlagt ist und/oder drehfest mit der Kupplungsnabe (61) verbunden ist und/oder axial an der Kupplungsnabe fixiert ist und/oder starr mit der Kupplüngsnabe verbunden ist.

17. Hydraulische Doppelkupplung nach einem der Ansprüche 1 bis 14,
**dadurch gekennzeichnet, dass** beide Betätigungskolben (45, 49, 51; 44, 50, 52) gemeinsam gegen dieselbe(n) Rückholfeder(n) (53a) abgestützt sind.

18. Hydraulische Doppelkupplung nach einem der vorangegangenen Ansprüche,
**dadurch gekennzeichnet, dass** den Betätigungskolben (45, 49, 51; 44, 50, 52) jeweils ein Kompensationskolben (55, 56) zugeordnet ist, welche sich gegen den Innenlamellenträger (40, 57, 58) abstützen.

19. Hydraulische Doppelkupplung nach einem der Ansprüche 1 bis 17,
**dadurch gekennzeichnet, dass** den Betätigungskolben (45, 49, 51; 44, 50, 52) jeweils ein Kompensationskolben (55, 56) zugeordnet ist, welche sich gegen ein gemeinsames Stützelement (59) abstützen, welches vorzugsweise ein Ringelement (59) ist, welches axial an der Kupplungsnabe (61) beanschlagt ist und/oder drehfest mit der Kupplungsnabe (61) verbunden ist und/oder axial an der Kupplungsnabe fixiert ist und/oder starr mit der Kupplungsnabe verbunden ist.

20. Hydraulische Doppelkupplung nach einem der vorangegangenen Ansprüche,
**dadurch gekennzeichnet, dass** alle Reiblamellen (29, 30, 33, 36, 34, 37, 35) Reibflächen aufweisen, deren mittlere Reibradien im Wesentlichen identisch sind.

21. Hydraulische Doppelkupplung nach Anspruch 20,
**dadurch gekennzeichnet, dass** die Reibflächen der Reiblamellen (29, 30, 33, 36, 34, 37, 35) identisch sind.

22. Hydraulische Doppelkupplung nach einem der vorangegangenen Ansprüche,
**dadurch gekennzeichnet, dass** die beiden Kupplungen in axialer Richtung im Wesentlichen spiegelsymmetrisch zueinander ausgebildet sind.

## Claims

1. Hydraulic double clutch for a gearbox with two coaxially disposed input shafts (9, 10),
- with a driven clutch housing (11) and
- with two hydraulically actuated clutches with friction plates (29, 30, 33, 34, 35, 36, 37) and annular actuating pistons (43, 44), wherein the first clutch connects the clutch housing (11) to the first input shaft (10) of the gearbox in an engageable and disengageable manner and the second clutch connects said clutch housing (11) to the second input shaft (9) of the gearbox in an engageable and disengageable manner and the two clutches have a common inner plate-carrier (40),
**characterised in that**
- the inner plate-carrier (40) passes through one actuating piston (43) of the actuating pistons (43, 44) at one end face, and that
- the said end face of the inner plate-carrier (40) is connected to the clutch housing (11) in a torsion-proof manner.

2. Hydraulic double clutch according to claim 1,
**characterised in that** the two clutches are disposed axially one behind the other.

3. Hydraulic double clutch according to claim 2,
**characterised in that** the two clutches have a common pressure plate (35).

4. Hydraulic double clutch according to claim 3,
**characterised in that** the pressure plate (35) is connected to the inner plate-carrier (40) in a torsion-proof manner.

5. Hydraulic double clutch according to claim 4,
**characterised in that** the pressure plate (35) is impinged upon axially or fixed in position axially.

6. Hydraulic double clutch according to claim 5,
**characterised in that** the pressure plate (35) is connected rigidly to the inner plate-carrier (40).

7. Hydraulic double clutch according to one of the preceding claims,
**characterised in that** the inner plate-carrier (40) passes through the other actuating piston (44) of the actuating pistons (43, 44) at the other end face.

8. Hydraulic double clutch according to claim 7,
**characterised in that**, at the other end face, the other actuating piston (44) radially supports the inner plate-carrier (40) and/or centres it and/or holds it in a twist-proofing and/or torsion-proof manner.

9. Hydraulic double clutch according to one of the preceding claims,
**characterised in that** the clutch housing (11) is connected to a clutch hub (61) in a torsion-proof manner and that a cylinder (77) is provided, which is axially impinged upon by the clutch hub (61) and by which the other actuating piston (44, 50) is guided in an axially displaceable manner.

10. Hydraulic double clutch according to claim 9,
**characterised in that**, at the other end face, the cylinder (77) radially supports the inner plate-carrier (40) and/or centres it and/or holds it in a twist-proofing and/or torsion-proof manner.

11. Hydraulic double clutch according to one of the preceding claims,
**characterised in that** the clutch housing (11) and/or the clutch hub have/has an additional cylinder (79), by which one actuating piston (45, 49) is guided in an axially displaceable manner.

12. Hydraulic double clutch according to one of the preceding claims,
**characterised in that** the two actuating pistons (44, 45) can be actuated against the force of one or more return springs (53, 53a, 54).

13. Hydraulic double clutch according to claim 12,
**characterised in that** the return spring or springs is/are a plate spring or springs, a helical spring or springs (53, 53a, 54) or a corrugated spring or springs.

14. Hydraulic double clutch according to claim 12 or 13,
**characterised in that** the return spring or springs (53, 54) is/are supported against a compensating piston (55, 56).

15. Hydraulic double clutch according to one of claims 12 to 14,
**characterised in that** the return springs (53, 54) of the two actuating pistons (44, 45) are supported against a common supporting element (59) or against separate elements.

16. Hydraulic double clutch according to claim 15,
**characterised in that** the common supporting element is an annular element (59) which is impinged upon axially by the clutch hub (61) and/or is connected to said clutch hub (61) in a torsion-proof manner and/or is fixed in position axially by said clutch hub and/or is rigidly connected to said clutch hub.

17. Hydraulic double clutch according to one of claims 1 to 14,
**characterised in that** the two actuating pistons (45, 49, 51; 44, 50, 52) are jointly supported against the same return spring or springs (53a).

18. Hydraulic double clutch according to one of the preceding claims,
**characterised in that** there is associated with each of the actuating pistons (45, 49, 51; 44, 50, 52) a compensating piston (55, 56), which pistons are supported against the inner plate-carrier (40, 57, 58).

19. Hydraulic double clutch according to one of claims 1 to 17,
**characterised in that** there is associated with each of the actuating pistons (45, 49, 51; 44, 50, 52) a compensating piston (55, 56), which pistons are supported against a common supporting element (59) which is preferably an annular element (59) which is impinged upon axially by the clutch hub (61) and/or is connected to said clutch hub (61) in a torsion-proof manner and/or is fixed in position axially by said clutch hub and/or is rigidly connected to said clutch hub.

20. Hydraulic double clutch according to one of the preceding claims,
**characterised in that** all the friction plates (29, 30, 33, 36, 34, 37, 35) have friction faces whose central radii of friction are substantially identical.

21. Hydraulic double clutch according to claim 20,
**characterised in that** the friction faces of the friction plates (29, 30, 33, 36, 34, 37, 35) are identical.

22. Hydraulic double clutch according to one of the preceding claims,
**characterised in that** the two clutches are constructed so as to be substantially specularly symmetrical in relation to one another in the axial direction.

## Revendications

1. Embrayage double hydraulique pour une transmission comprenant deux arbres d'entrée de transmission (9, 10) coaxiaux,
- avec un carter d'embrayage (11) entraîné, et
- avec deux embrayages actionnés hydrauliquement, comprenant des lamelles de friction (29, 30, 33, 34, 35, 36, 37) et des pistons d'actionnement (43, 44) annulaires, le premier embrayage reliant de façon commutable le carter d'embrayage (11) au premier arbre d'entrée de transmission (10), et le deuxième embrayage reliant de façon commutable le carter d'embrayage (11) au deuxième arbre d'entrée de transmission (9), et les deux embrayages présentant un support de lamelles intérieures (40) commun,
**caractérisé en ce que**,
- le support de lamelles intérieures (40) traverse, du côté d'une extrémité, un piston d'actionnement (43) des pistons d'actionnement (43, 44), et **en ce que**
- ce côté d'extrémité du support de lamelles intérieures (40) est relié de façon assujettie en rotation au carter d'embrayage (11).

2. Embrayage double hydraulique selon la revendication 1, **caractérisé en ce que** les deux embrayages sont disposés axialement l'un derrière l'autre.

3. Embrayage double hydraulique selon la revendication 2, **caractérisé en ce que** les deux embrayages présentent une plaque de pressage (35) commune.

4. Embrayage double hydraulique selon la revendication 3, **caractérisé en ce que** la plaque de pressage (35) est reliée de façon assujettie en rotation au support de lamelles intérieures (40) .

5. Embrayage double hydraulique selon la revendication 4, **caractérisé en ce que** la plaque de pression (35) est sollicitée axialement ou fixée axialement.

6. Embrayage double hydraulique selon la revendication 5, **caractérisé en ce que** la plaque de pression (35) est reliée rigidement au support de lamelles intérieures (40).

7. Embrayage double hydraulique selon l'une des revendications précédentes, **caractérisé en ce que** le support de lamelles intérieures (40) traverse, du côté d'une autre extrémité, l'autre (44) des pistons d'actionnement (43, 44).

8. Embrayage double hydraulique selon la revendication 7, **caractérisé en ce que** l'autre piston d'actionnement (44) soutient radialement et/ou maintient centré et/ou assuré en rotation et/ou assujetti en rotation, le support de lamelle intérieure (40) du côté de l'autre extrémité.

9. Embrayage double hydraulique selon l'une des revendications précédentes, **caractérisé en ce que** le carter d'embrayage (11) est relié, de façon assujettie en rotation, à un moyeu d'embrayage (61) et **en ce qu'**un cylindre (77) est prévu, sollicitant axialement au niveau du moyeu d'embrayage (61) et sur lequel l'autre piston d'actionnement (44, 50) est guidé de façon déplaçable axialement.

10. Embrayage double hydraulique selon la revendication 9, **caractérisé en ce que** le cylindre (77) soutient radialement et/ou maintient centré et/ou assuré en rotation et/ou assujetti en rotation, le support de lamelle extérieure (40).

11. Embrayage double hydraulique selon l'une des revendications précédentes, **caractérisé en ce que** le carter d'embrayage (11) ou le moyeu d'embrayage présente un autre cylindre (79), sur lequel un piston d'actionnement (45, 49) est guidé de façon déplaçable axialement.

12. Embrayage double hydraulique selon l'une des revendications précédentes, **caractérisé en ce que** les deux pistons d'actionnement (44, 45) sont susceptibles d'être actionnés à l'encontre de la force d'un ou plusieurs ressorts de rappel (53, 53a, 54).

13. Embrayage double hydraulique selon la revendication 12, **caractérisé en ce que** le ou les ressorts de rappel est/sont un ou des ressorts-disques, un ou des ressorts hélicoïdaux (53, 53a, 54) ou un ou des ressorts ondulés.

14. Embrayage double hydraulique selon la revendication 12 ou 13, **caractérisé en ce que** le ou les ressorts de rappel (53, 54) est/sont soutenu(s) contre un piston de compensation (55, 56).

15. Embrayage double hydraulique selon l'une des revendications 12 à 14, **caractérisé en ce que** les ressorts de rappel (53, 54) des deux pistons d'actionnement (44, 45) sont soutenus contre un élément d'appui (59) commun ou contre un élément séparé.

16. Embrayage double hydraulique selon la revendication 15, **caractérisé en ce que** l'élément d'appui commun est un élément annulaire (59), sollicité axialement sur le moyeu d'embrayage (61) et/ou relié de façon assujettie en rotation au moyeu d'embrayage (61) et/ou fixé axialement sur le moyeu d'embrayage et/ou relié rigidement au moyeu d'embrayage.

17. Embrayage double hydraulique selon l'une des revendications 1 à 14, **caractérisé en ce que** les deux pistons d'actionnement (45, 49, 51 ; 44, 50, 52) sont soutenus conjointement contre le ou les mêmes ressorts de rappel (53a).

18. Embrayage double hydraulique selon l'une des revendications précédentes, **caractérisé en ce qu'**aux pistons d'actionnement (45, 49, 51 ; 44, 50, 52) est chaque fois associé un piston de compensation (55, 56), prenant appui contre le support de lamelles intérieures (40, 57, 58).

19. Embrayage double hydraulique selon l'une des revendications 1 à 17, **caractérisé en ce qu'**aux pistons d'actionnement (45, 49, 51 ; 44, 50, 52) est chaque fois associé un piston de compensation (55, 56), prenant appui contre un élément d'appui (59) commun, sollicité axialement sur le moyeu d'embrayage (61) et/ou relié de façon assujettie en rotation au moyeu d'embrayage (61) et/ou fixé axialement au moyeu d'embrayage et/ou relié rigidement au moyeu d'embrayage.

20. Embrayage double hydraulique selon l'une des revendications précédentes, **caractérisé en ce que** toutes les lamelles de friction (29, 30, 33, 36, 34, 37, 35) présentent des surfaces de friction dont les rayons de friction moyens sont sensiblement identiques.

21. Embrayage double hydraulique selon la revendication 20, **caractérisé en ce que** les surfaces de friction des lamelles de friction (29, 30, 33, 36, 34, 37, 35) sont identiques.

22. Embrayage double hydraulique selon l'une des revendications précédentes, **caractérisé en ce que** les deux embrayages sont réalisés de façon à répondre mutuellement sensiblement à une symétrie spéculaire en direction axiale.
